# EUROPÄISCHE PATENTSCHRIFT

(11) **EP 0 799 738 B1**
(45) Veröffentlichungstag und Bekanntmachung des Hinweises auf die Patenterteilung: **25.11.1998**
(21) Anmeldenummer: 97102265.2
(22) Anmeldetag: 13.02.1997
(51) Int. Cl.: B60K 15/03

(54) **Kraftstoffbehälter aus Kunststoff**
Plastic fuel tank
Réservoir de carburant en matière plastique

(30) Priorität: 06.04.1996 DE 19613894
(43) Veröffentlichungstag der Anmeldung: 08.10.1997
(73) Patentinhaber: Bayerische Motoren Werke Aktiengesellschaft, 80788 München (DE)
(72) Erfinder: Gratza, Peter, 80995 München (DE)

(56) Entgegenhaltungen:
- DE-A- 4 031 434
- DE-A- 4 201 708
- US-A- 4 952 347

## Beschreibung

Die Erfindung betrifft einen Kraftstoffbehälter aus Kunststoff gemäß dem Oberbegriff des Anspruchs 1.

Aus der DE-PS 40 31 434 ist bereits ein solcher Kraftstoffbehälter aus Kunststoff bekannt, der entlang der Unterseite eines Bodenblechs eines Kraftfahrzeuges angeordnet ist. Im Kraftstoffbehälter sind verschiedene Bauteile, wie beispielsweise eine Kraftstoffpumpe, eine Strahlpumpe und Meßeinheiten angeordnet. Diese Bauteile oder Zusatzeinrichtungen werden durch eine Wartungsöffnung in den Kraftstoffbehälter eingebaut. Über die Wartungsöffnung ist gleichzeitig eine Inspektion, Justierung und Auswechslung der Zusatzeinrichtungen möglich. Die Wartungsöffnung weist einen mit einem Außengewinde versehenen Kragen auf, auf den ein Schraubdeckel schraubbar ist. Die Wartungsöffnung liegt einer Prüföffnung gegenüber, die in einem Bodenblech der Fahrzeugkarosserie vorgesehen ist. In einem Reparaturfall müssen die defekten Bauteile durch den Fahrzeuginnenraum hindurch gewechselt werden. Dadurch kann es zu Geruchsbelästigungen kommen. Von Nachteil ist ferner, daß nach der Komplettierung des Kraftstoffbehälters mit den genannten Zusatzeinrichtungen überprüft werden muß, daß der Schraubdeckel lagerichtig und dicht den Kraftstoffbehälter verschließt.

Aufgabe der Erfindung ist es, einen Kraftstoffbehälter aus Kunststoff zu schaffen, bei dem beim erstmaligen Einsatz in einem Kraftfahrzeug eine zusätzliche Kontrolle der Dichtheit der Wartungsöffnung wegfällt.

Diese Aufgabe wird bei einem erfindungsgemäßen Kraftstoffbehälter durch die Merkmale des Anspruchs 1 gelöst.

Bei dem erfindungsgemäßen Kraftstoffbehälter aus Kunststoff ist die Wartungsöffnung durch einen Verschlußdeckel verschlossen. Der Verschlußdeckel ist beabstandet zur Wartungsöffnung mit dem Kraftstoffbehälter dicht verschweißt. Die Verbindung des Verschlußdeckels mit dem Kraftstoff-Behälter erfolgt in einer Weise, daß eine sehr hohe Permeations-Dichtheit erreicht wird, die beispielsweise die von der US-Gesetzgebung geforderten Bedingungen übertrifft. Durch die erfindungsgemäße Bauweise kann der Kraftstoffbehälter endmontiert, dicht gelagert und verbaut werden, ohne daß überprüft werden muß, ob die Wartungsöffnung dicht verschlossen ist. Von Vorteil ist ferner, daß die Wartungsöffnung mit einem Gewinde versehen ist, bei dem in einem Reparaturfall ein Verschlußdeckel aufschraubbar ist. Zu diesem Zweck wird in den mit dem Kraftstoffbehälter verschweißten Deckel eine Öffnung geschnitten, durch die die Zusatzeinrichtungen aus dem Kraftstoffbehälter ausgebaut und eingebaut werden können.

In einer vorteilhaften Ausführungsform ist die Wartungsöffnung an der Unterseite des Kraftstoffbehälters ausgebildet, so daß in einem Reparaturfall eventuell im Kraftstoffbehälter noch befindliche Kraftstoffe und Kraftstoff-Gase an die Umgebung abgegeben werden und somit nicht zu einer Geruchsbelästigung im Fahrzeuginnenraum führen.

Die im Reparaturtall ausgebildete Öffnung im an den Kraftstoffbehälter angeschweißten Deckel ist so beschaffen, daß eine Schutzkappe eingeklippst werden kann, wobei die Schutzkappe als Schutz gegen Steinschlag oder vor thermischer Belastung dient.

Eine Ausführungsform der Erfindung wird nachstehend anhand der Figuren beispielshalber beschrieben. Dabei zeigen:
- Figur 1: eine Schnittansicht von der Seite einer Wartungsöffnung, die durch einen mit dem Kraftstoffbehälter verschweißten Deckel verschlossen ist und eines Auskreiswerkzeuges oberhalb des Deckels und
- Figur 2: eine Schnittansicht von der Seite einer Wartungsöffnung nach einer Reparatur, wobei die Wartungsöffnung durch einen Schraubdeckel verschlossen ist.

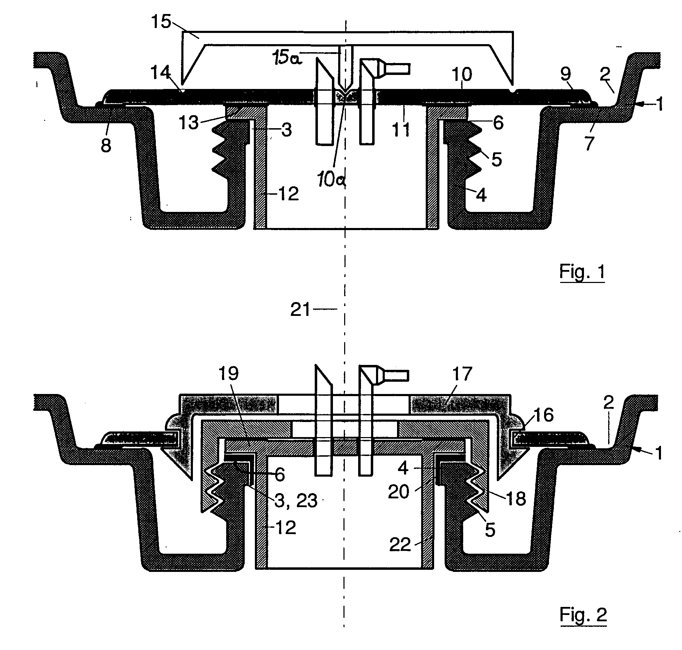

Die Figur 1 zeigt einen Abschnitt eines Kraftstoffbehälters 1 aus Kunststoff, bei dem geschützt in einer Vertiefung 2 eine Wartungsöffnung 3 ausgebildet ist. Die Wartungsöffnung 3 weist einen umlaufenden Kragen 4 auf, der mit einem Außengewinde 5 versehen ist. Beabstandet zu dem Außengewinde 5 ist oberhalb der Stirnseite 6 des Kragens 4 ein kreisförmiger Absatz 7 in dem Kraftstoffbehälter 1 ausgebildet. Der Absatz 7 weist eine Befestigungsfläche 8 auf. Mit dieser Befestigungsfläche 8 ist ein umlaufender Rand 9 eines Verschlußdeckels 10 verschweißt. An der Innenseite 11 des Verschlußdeckels 10 ist eine Zusatzeinrichtung 12 dicht befestigt. Die Befestigung kann beispielsweise durch Kleben oder Schweißen erfolgen. In der in der Figur 1 gezeigten Ausführungsform ist die Zusatzeinrichtung 12 an ihrer Stirnfläche 13 mit der Innenfläche 11 des Verschlußdeckels 10 verbunden. Der Verschlußdeckel 10, kann, wie dies in der Figur 1 gezeigt ist, mit einer umlaufenden Rille 14 versehen sein, damit ein Auskreis-Werkzeug 15 zum Ausschneiden einer in der Figur 2 gezeigten Kreisöffnung 16 lagerichtig angesetzt werden kann. Ferner kann der Verschlußdeckel 10 in der Mitte 10a eine Vertiefung aufweisen, in die eine Zentrierung 13a des Auskreis-Werkzeuges beim Ausschneid-Vorgang einrastet.

Die Figur 2 zeigt den Zustand nach einer Wartung oder einem Reparaturfall. In den Verschlußdeckel 10 wurde mittels des Auskreis-Werkzeuges 15 die Kreisöffnung 16 geschnitten. In die Kreisöffnung 16 ist eine Schutzkappe 17 eingeklippst. Die Wartungsöffnung 3 ist durch einen Schraubdeckel 18 verschlossen, der über das Außengewinde 5 geschraubt ist. In der Wartungsöffnung 3 ist eine Zusatzeinrichtung 12 angeordnet, deren Befestigungsflansch 19 an der Stirnseite 6 des Kragens 4 anliegt. Zwischen dem Befestigungsflansch 19 und dem Kragen 4 ist eine Dichtung 20 angeordnet, die beispielsweise aus einem Elastomer besteht. Die Dichtung 20 dichtet sowohl in Richtung einer Symmetrieachse 21 als auch in radialer Richtung zwischen einer Mantelfläche 22 der Zusatzeinrichtung 12 und einem umlaufenden Rand 23 des Kragens 4 ab.

## Patentansprüche

1. Kraftstoffbehälter (1) aus Kunststoff für ein Fahrzeug, mit einer Wartungsöffnung (3) für im Kraftstoffbehälter angeordnete Zusatzeinrichtungen (12), wobei die Wartungsöffnung (3) mit einem Gewinde (5) versehen ist, das mit einem Schraubdeckel (18) verschließbar ist, dadurch gekennzeichnet, daß beim Ersteinsatz des Kraftstoffbehälters (1) die Wartungsöffnung (3) durch einen Verschlußdeckel (10) verschlossen ist, der beabstandet zur Wartungsöffnung (3) mit dem Kraftstoffbehälter (1) dicht verschweißt ist.

2. Kraftstoffbehälter nach Anspruch 1, dadurch gekennzeichnet, daß die Wartungsöffnung (3) an der Unterseite des Kraftstoffbehälters (1) ausgebildet ist.

3. Kraftstoffbehälter nach Anspruch 1 oder 2, dadurch gekennzeichnet, daß nach einer Wartung oder einer Reparatur oder dergleichen die Wartungsöffnung (3) durch einen auf dem Gewinde (5) aufgeschraubten Schraubdeckel (18) verschlossen ist.

4. Kraftstoffbehälter nach einem der vorstehenden Ansprüche, dadurch gekennzeichnet, daß an dem Verschlußdeckel (10) eine Zusatzeinrichtung (12) dicht befestigt ist.

5. Kraftstoffbehälter nach einem der vorstehenden Ansprüche, dadurch gekennzeichnet, daß in einer nach einer Wartung in dem Verschlußdeckel (10) ausgebildeten Kreisöffnung (16) eine Schutzkappe (17) eingeklippst ist.

## Claims

1. A fuel container (1) of plastics material, with a maintenance aperture (3) for additional devices (12) arranged in the fuel container (1), whereby the maintenance aperture (3) is provided with a thread (5), which can be closed by a screw cover (18), characterised in that on the first installation of the fuel container (1) the maintenance aperture (3) is sealed by a sealing cover (10), which is tightly welded to the fuel container at a distance from the maintenance aperture (3).

2. A fuel container according to Claim 1, characterised in that the maintenance aperture (3) is formed on the underside of the fuel container (1).

3. A fuel container according to Claim 1 or 2, characterised in that following maintenance or a repair or similar the maintenance aperture (3) is sealed by a screw cover (18) screwed onto the thread (5).

4. A fuel container according to one of the foregoing Claims, characterised in that an additional device (12) is tightly fastened onto the sealing cover (10).

5. A fuel container according to one of the foregoing Claims, characterised in that, following maintenance, a protective cap (17) is clipped into the circular aperture (16) in the sealing cover (10).

## Revendications

1. Réservoir de carburant en matière plastique (1) pour véhicule, comportant une ouverture (3) d'entretien des dispositifs additionnels (12) logés dans le réservoir, cette ouverture portant un filetage (5) qui peut recevoir un couvercle fileté (18) d'obturation,
caractérisé en ce que
lors de l'installation du réservoir (1) en première monte, l'ouverture d'entretien (3) est obturée par un couvercle de fermeture (10) soudé de manière étanche au réservoir (1), à une certaine distance de l'ouverture d'entretien.

2. Réservoir à carburant selon la revendication 1,
caractérisé en ce que
l'ouverture d'entretien (3) est située sur la face inférieure du réservoir (1) de carburant.

3. Réservoir à carburant selon la revendication 1 ou 2,
caractérisé en ce'
après un entretien, une réparation ou une opération analogue, l'ouverture d'entretien (3) est obturée par un couvercle fileté (18) vissé sur le filetage (5).

4. Réservoir à carburant selon une des revendications précédentes,
caractérisé en ce que
sur le couvercle de fermeture (10) est fixé de manière étanche un dispositif additionnel (12).

5. Réservoir à carburant selon une des revendications précédentes,
caractérisé en ce qu'
un capot de protection (17) est clipsé, après une opération d'entretien, dans une ouverture circulaire (16) pratiquée dans le couvercle de fermeture (10).
